# EUROPEAN PATENT SPECIFICATION

(11) **EP 4 607 317 B1**
(45) Date of publication and mention of the grant of the patent: **02.12.2026**
(21) Application number: 25158766.3
(22) Date of filing: 19.02.2025
(51) Int. Cl.: G06F 1/16, H01R 13/639, E05C 19/06, H01R 13/627, E05B 65/00

(54) **CONNECTION DEVICE AND ELECTRONIC DEVICE**
VERBINDUNGSVORRICHTUNG UND ELEKTRONISCHE VORRICHTUNG
DISPOSITIF DE CONNEXION ET DISPOSITIF ÉLECTRONIQUE

(30) Priority: 26.02.2024 JP 2024026611
(43) Date of publication of application: 27.08.2025
(73) Proprietor: Panasonic Intellectual Property Management Co., Ltd., Kadoma-shi, Osaka 571-0057 (JP)
(72) Inventor: YOKOTA, Kiyoshi, Osaka, 571-0057 (JP); SATO, Takashi, Osaka, 571-0057 (JP); TAKETANI, Keiichi, Osaka, 571-0057 (JP)
(74) Representative: Eisenführ Speiser

(56) References cited:
- EP-A1- 4 621 526
- KR-B1- 101 835 115
- US-A1- 2014 193 193
- US-B2- 9 223 356

## Description

### TECHNICAL FIELD

The present disclosure relates to a connection device and an electronic device.

### BACKGROUND ART

KR 10-1835115 B1 provides a connector assembly which has a connector position assurance apparatus that maintains a required connector position assurance (CPA) insertion force when the CPA is fastened and before the counterpart connector is fastened. The connector assembly includes: a housing wherein a forward opening is formed where into a counterpart connector is inserted from the front, a terminal receiving hole is formed within the forward opening, a CPA insertion part is formed on one side so that it is connected to the forward opening, and a locking protrusion is formed on the forward interior of the CPA insertion part so as to prevent forward detachment of the counterpart connector inserted via the forward opening by locking it into place; and a CPA part that assures the locking position of the counterpart connector by being inserted into the CPA insertion part via the rear of the connector housing; wherein the CPA part has an edge formed on the front end of the locking lever that contacts the locking protrusion so that when the CPA part is inserted into the CPA insertion part, before the counterpart connector is fastened, the front end of the CPA part prevents vertical slippage due to the edge, and the CPA insertion force is kept equal to or greater than a specified force.

JP5782472B2 discloses an electronic equipment including: an electronic component that includes a connector; and a main body casing that includes an accommodation recess capable of accommodating the electronic component and is provided with a main body-side connector capable of connecting to the connector of the electronic component in the accommodation recess, in which the electronic component is attachable to and detachable from the main body casing by configuring a locking claw portion of a latch member, which is provided to be movable with respect to the main body casing, to be lockable with a locking portion of the electronic component accommodated in the accommodation recess, and the electronic component and the main body casing are electrically connected by accommodating the electronic component in the accommodation recess of the main body casing and connecting the connector and the main body-side connector.

US2014/193193A1 provides a detachable convertible device, which has a time-delayed latch for receiving a manipulation force to move the latch from a rest position of the latch to a non-rest position of the latch, where the latch delays returning to the rest position after period of time. The latch is integrated into a computing device, and attaches a first portion of the computing device to a second portion of the computing device. An external slider is coupled to the latch, where the external slider receives the manipulation force. A damper element causes a delay to a spring to return to a closed position.

The main body casing of the electronic equipment includes a latch retaining portion that moves in a direction in which a locked state of the locking claw portion to the engagement portion is released, and engages with a pushing portion of the latch member that is pushed out and moved in a direction in which the electronic component is detached from the accommodation recess by the pushing portion, thereby restricting movement of the latch member in a locking direction by an elastic member.

### SUMMARY OF INVENTION

The present disclosure has been made in view of the above circumstances in the related art, and an object thereof is to reduce a possibility that connections between a plurality of units are accidentally disconnected even when an unexpected impact or the like occurs, in a connection device and an electronic device that include the plurality of units connected to each other.

According to an illustrative aspect of the present disclosure, a connection device is provided as defined in claim 1.

According to the present disclosure, in a connection device and an electronic device that include a plurality of units connected to each other, a possibility that connections between the plurality of units are accidentally disconnected can be reduced even when an unexpected impact or the like occurs.

### BRIEF DESCRIPTION OF DRAWINGS

FIGS. 1A and 1B are views illustrating an example of an electronic device, FIG. 1A is a view illustrating a front surface thereof viewed from a user, and FIG. 1B is a view illustrating a back surface thereof viewed from the user;
FIGS. 2A and 2B are views illustrating an example of a rear surface of the electronic device and access holes, FIG. 2A is a view illustrating the entire rear surface of the electronic device, and FIG. 2B is an enlarged view of an access hole and surroundings thereof;
FIG. 3 is a view illustrating a monitor unit and a peripheral bar unit when connected;
FIGS. 4A to 4E are views illustrating a process of detaching the monitor unit and the peripheral bar unit;
FIG. 5 is a view illustrating the monitor unit and the peripheral bar unit when not connected;
FIG. 6 is a view illustrating an example of a state in which the electronic device receives an impact;
FIG. 7 is a view illustrating an example of a latch and an engagement portion in a state in which the monitor unit and the peripheral bar unit are connected;
FIGS. 8A and 8B are views illustrating another connection form between the monitor unit and the peripheral bar unit, FIG. 8A is a view illustrating the monitor unit and the peripheral bar unit when connected, and FIG. 8B is a view illustrating the monitor unit and the peripheral bar unit when not connected;
FIGS. 9A to 9D are views illustrating another connection form between the monitor unit and the peripheral bar unit, FIG. 9A is a view illustrating the monitor unit and the peripheral bar unit when not connected, FIG. 9B is a view illustrating the monitor unit and the peripheral bar unit when connected, FIG. 9C is an enlarged view of a latch and an engagement portion when not connected, and FIG. 9D is an enlarged view of the latch and the engagement portion when connected;
FIG. 10 is a view illustrating the monitor unit and the peripheral bar unit when connected in a case in which spring components are used;
FIG. 11 is a view illustrating the monitor unit and the peripheral bar unit when not connected in a case in which the spring components are used;
FIG. 12 is a view illustrating the electronic device in a case in which the monitor unit and the peripheral bar unit are connected by using the spring components;
FIG. 13 is a view illustrating engagement components in a state in which the monitor unit and the peripheral bar unit are connected;
FIG. 14A is a view illustrating the engagement components, and FIG. 14B is a view of a latch when the engagement components are used;
FIG. 15 is a view illustrating the electronic device in a case in which the engagement components are used; and

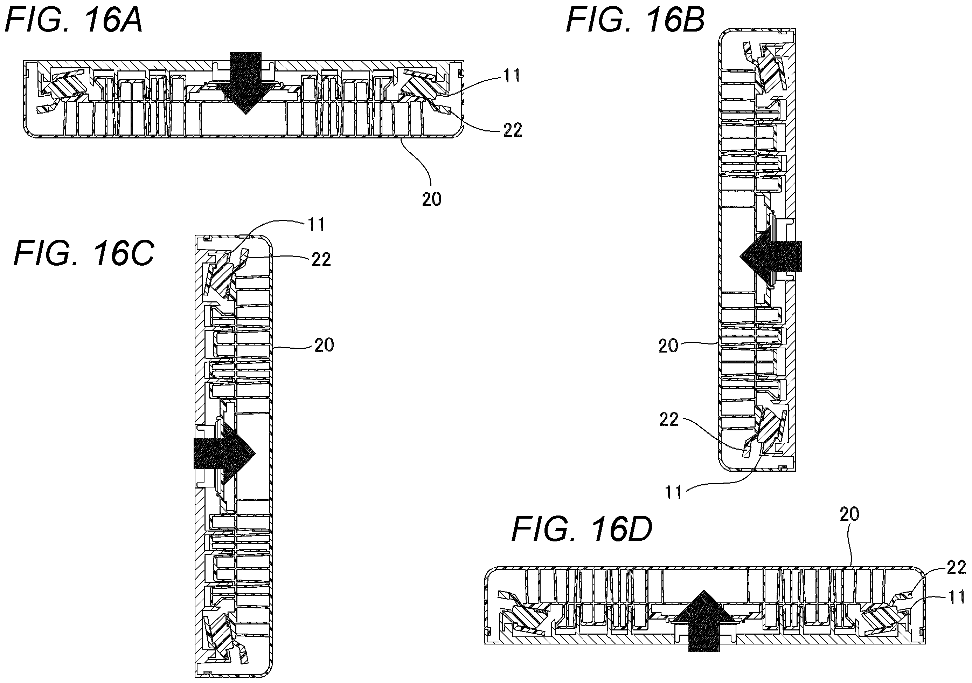

FIGS. 16A to 16D are views illustrating a relation between a direction in which the peripheral bar unit is detached from the monitor unit and a disengagement direction from an engagement position of the latch, FIG. 16A is a view illustrating a case in which the detachment direction is a downward direction, FIG. 16B is a view illustrating a case in which the detachment direction is a leftward direction, FIG. 16C is a view illustrating a case in which the detachment direction is a rightward direction, and FIG. 16D is a view illustrating a case in which the detachment direction is an upward direction.

### DESCRIPTION OF EMBODIMENTS

### (Background of Present Disclosure)

In a modern aircraft, each seat is provided with an electronic device (for example, in-flight entertainment (IFE)) such as a personal monitor capable of viewing movies, playing games, reading, checking flight status, and the like, or a seat monitor capable of providing other in-flight entertainment. In the related art, an electronic device is provided with a monitor and connection portions for accessory devices (insertion ports) such as an earphone jack, a USB port, and Wi-Fi (registered trademark) communication. However, compared with a long life cycle of the monitor, these connection portions may require updates due to changes in technique, and may have a shorter life cycle than the monitor. Therefore, an electronic device that enables a monitor and connection portions to be attachable and detachable, and the connection portions are replaceable, has begun to appear.

JP5782472B2 discloses the electronic equipment in which the electronic component that includes the connector such as a battery device is attachable to and detachable from the main body casing.

However, in an aircraft, there is a possibility that a connection between the main body casing and the electronic component including the connector is accidentally disconnected due to an unexpected impact or the like. The unexpected impact is, for example, a sudden shaking of an airframe, causing a part of a passenger body or an object to collide with at least one of the main body casing and the electronic component. When the electronic component is detached, there is a risk of a secondary disaster such as a passenger being injured by the electronic component. Therefore, there is a need for a configuration capable of reducing the possibility that this connection is accidentally disconnected, even when an unexpected impact or the like occurs.

Hereinafter, embodiments specifically disclosing configurations and operations of an electronic device according to the present disclosure will be described in detail with reference to the drawings as appropriate. However, unnecessarily detailed description may be omitted. For example, the detailed descriptions of well-known matters and the redundant description of substantially the same configuration may be omitted. This is to avoid unnecessary redundancy of the following description and facilitate understanding of those skilled in the art. The accompanying drawings and the following description are provided for those skilled in the art to fully understand the present disclosure, and are not intended to limit the subject matters described in the claims. In addition, although a connection device will be described using an electronic device such as an IFE, the connection device is not limited to the electronic device and may be used for any device.

### (Embodiment)

### 1. Regarding Electronic Device 1

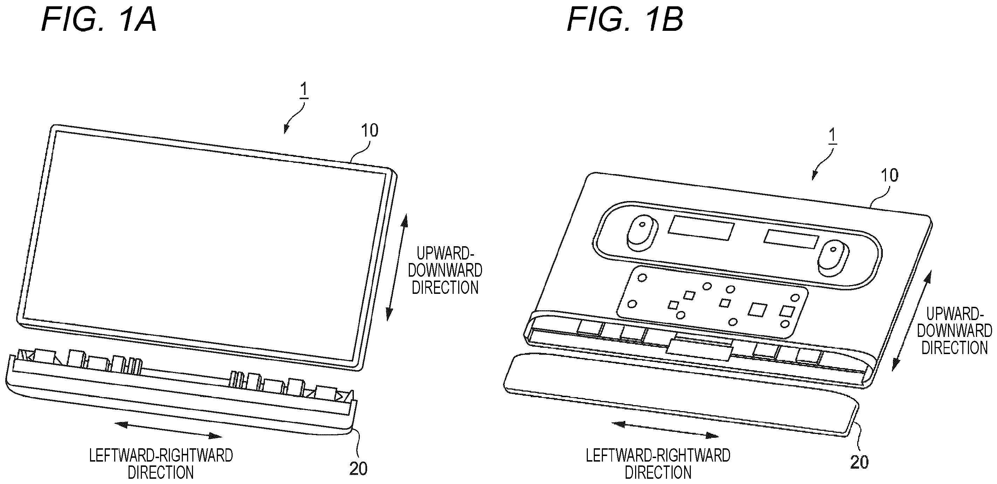

First, an electronic device 1 will be described. FIGS. 1A and 1B are views illustrating an example of the electronic device 1, FIG. 1A illustrates a front surface thereof viewed from a user (passenger), and FIG. 1B illustrates a back surface thereof viewed from the user (passenger). The electronic device 1 is, for example, an IFE mounted around a seat of an aircraft or the like. The electronic device 1 includes a monitor unit 10 and a peripheral bar unit 20. The monitor unit 10 includes a built-in display or monitor. The peripheral bar unit 20 is provided with an earphone jack, a USB port, and connection portions for accessory devices (such as an insertion port, an interface, or a port). The monitor unit 10 is likely to be used for a long period of time. However, the peripheral bar unit 20 not only experiences changes in demand over time, but also involves frequent physical contact, such as insertion ports, making the need for replacement generally higher.

### 2. Regarding Detachment of Monitor Unit 10 and Peripheral Bar Unit 20

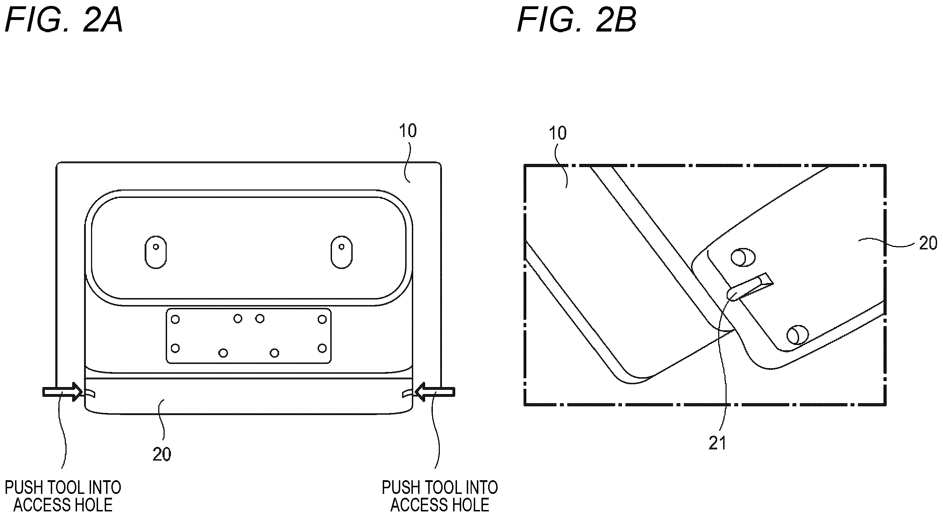

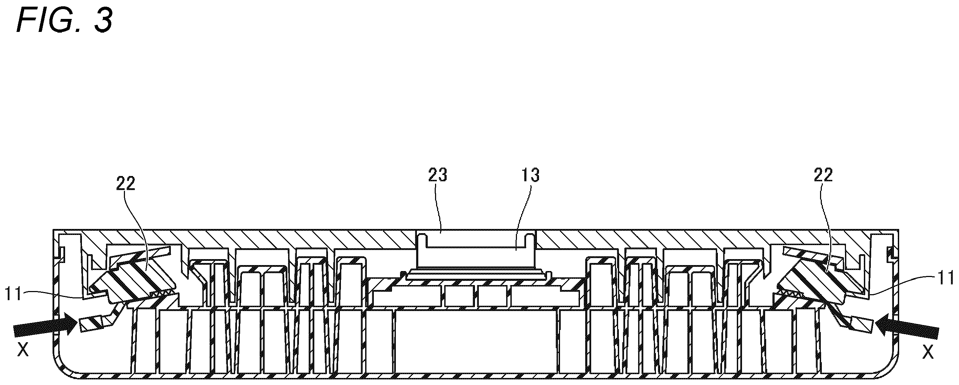

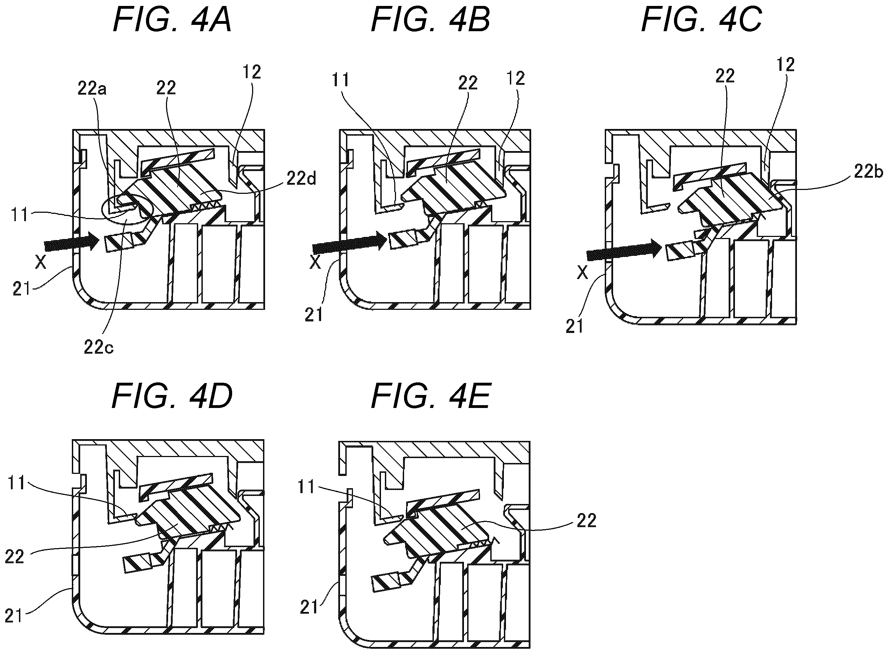

Next, detachment of the monitor unit 10 and the peripheral bar unit 20 will be described. FIGS. 2A and 2B are views illustrating an example of a rear surface of the electronic device 1 and access holes. FIG. 2A is a view illustrating the entire rear surface of the electronic device 1, and FIG. 2B is an enlarged view of an access hole and surroundings thereof. FIG. 3 is a view illustrating the monitor unit 10 and the peripheral bar unit 20 when connected. FIGS. 4A to 4E are views illustrating a process of detaching the monitor unit 10 and the peripheral bar unit 20, and states change from FIGS. 4A to 4E over time. Further, although FIGS. 4A to 4E illustrate only a configuration of the back surface of the peripheral bar unit 20 on a left side to simplify the description, the following description of FIGS. 4A to 4E can be similarly applied to a configuration of the back surface of the peripheral bar unit 20 on a right side.

As illustrated in each of FIGS. 2A and 2B, access holes 21 are provided in the peripheral bar unit 20 on the rear surface. By pushing a tool such as a rod-shaped tool into the access hole 21, a user (for example, a maintenance person for the electronic device 1) can detach the monitor unit 10 and the peripheral bar unit 20. Here, since the monitor unit 10 is fixed to an airframe, the peripheral bar unit 20 is detached from the monitor unit 10. The access holes 21 are provided at two locations, that is, one on each of left and right sides.

As illustrated in FIG. 3, latches 22 are provided on left and right sides of the peripheral bar unit 20. The latches 22 are biased by springs, and respectively receive forces toward the left and right outer sides from the springs. The latch 22 of the peripheral bar unit 20 is engaged by an engagement portion 11 of the monitor unit 10, thereby maintaining a state in which the monitor unit 10 and the peripheral bar unit 20 are physically connected. Further, the monitor unit 10 and the peripheral bar unit 20 are physically and electrically connected to each other by a connection portion 13 (insertion port) of the monitor unit 10 and a connection portion 23 (plug) of the peripheral bar unit 20. By pushing the tool through the access hole 21 illustrated in FIGS. 2A and 2B, a force indicated by the arrow X is applied. Then, the latch 22 biased by the spring is pushed to an inner side of the peripheral bar unit 20, the latch 22 is separated from the engagement portion 11, and the monitor unit 10 and the peripheral bar unit 20 are detached.

The detachment of the monitor unit 10 and the peripheral bar unit 20 will be described in detail with reference to each of FIGS. 4A to 4E. The latch 22 includes inclined surfaces 22a and 22b on left and right upper surfaces, respectively, and has a trapezoidal shape in which an upper edge is shorter than a lower edge. The upper edge and the lower edge do not extend in a horizontal direction, but are inclined with respect to the horizontal direction. This inclination slopes in an upward direction more on the inner side (right side in FIGS. 4A to 4E) than on the outer side (left side in FIGS. 4A to 4E). In FIG. 4A, at an engagement position, the latch 22 engages with the engagement portion 11 at an engagement end 22c. A surface of the engagement end 22c of the latch 22 faces a surface of the engagement portion 11. That is, the monitor unit 10 and the peripheral bar unit 20 are in a connected state. An engagement surface of the engagement portion 11 is a surface on which a force biasing the latch 22 in an outer side direction is applied to the latch 22 when a force separating the peripheral bar unit 20 from the monitor unit 10 is applied. To ensure a smooth latch stroke with respect to such an engagement surface, the upper edge and the lower edge do not extend in the horizontal direction, but are inclined with respect to the horizontal direction. This inclination slopes in the upward direction more on the inner side (for example, the right side in FIGS. 4A to 4E) than on the outer side (for example, the left side in FIGS. 4A to 4E). By pushing the tool into this position through the access hole 21, the force indicated by the arrow X is applied to the latch 22. Then, as illustrated in FIG. 4B, the pushed latch 22 moves in a disengagement direction from the engagement position, and comes into contact with a rib 12 provided on the monitor unit 10. At this time, a lower edge of the inclined surface 22b on the right side of the latch 22 comes into contact with the rib 12. Further, when the force indicated by the arrow X is applied to the latch 22, a contact portion between the inclined surface 22b of the latch 22 on the right side and the rib 12 moves to an upper edge of the inclined surface 22b. As a result, as illustrated in FIG. 4C, the latch 22 moves in a downward direction. Accordingly, an engagement piece of the latch 22 on the left side (for example, a lower edge of the inclined surface 22a of the latch 22 on the left side) is positioned below the engagement surface of the engagement portion 11 of the monitor unit 10. That is, the peripheral bar unit 20 moves in a direction in which the monitor unit 10 and the peripheral bar unit 20 are separated from each other. However, in the state in FIG. 4C, the monitor unit 10 and the peripheral bar unit 20 are not completely separated from each other. FIG. 4C illustrates the state in which the force indicated by the arrow X is maximum applied to the latch 22, and the biased spring is most contracted. FIGS. 4D to 4E may be omitted, and the monitor unit 10 and the peripheral bar unit 20 may be completely separated from each other in the state in FIG. 4C.

Next, after FIG. 4C, the force indicated by the arrow X is weakened, resulting in the state in FIG. 4D. After this, since the latch 22 moves in a leftward direction due to a force of the spring, the engagement portion 11 and the lower edge of the inclined surface 22a of the latch 22 on the left side come into contact with each other. Then, since the force of the spring continues to be applied, the latch 22 continues to move, and a portion where the engagement portion 11 and the inclined surface 22a come into contact with each other gradually moves to an upper edge of the inclined surface 22a of the latch 22 on the left side. As a result, as illustrated in FIG. 4E, the monitor unit 10 and the peripheral bar unit 20 are detached.

As described above, in the electronic device 1 that includes the monitor unit 10 and the peripheral bar unit 20, which are attachably and detachably connected to each other, the peripheral bar unit 20 includes the latch 22 that includes the inclined surfaces 22a and 22b on each of the two left and right end portions thereof, and the monitor unit 10 includes the engagement portion 11 that engages with one of the left and right engagement ends 22c of the latch 22 (outer side in FIGS. 4A to 4E), and the rib 12 that is located in the other end side of the latch 22 (inner side in FIGS. 4A to 4E) and faces the engagement portion 11. The latch 22 is biased by the spring and is movable. As illustrated in FIGS. 3 and 4A, when the monitor unit 10 and the peripheral bar unit 20 are connected to each other, the latch 22 is positioned between the engagement portion 11 and the rib 12.

Further, when the monitor unit 10 and the peripheral bar unit 20 are detached, the latch 22 moves in an inner side direction of the peripheral bar unit 20 in the horizontal direction due to a force toward the inner side thereof applied to the spring, so that the inclined surface 22b provided on an end portion of the latch 22 in the inner side comes into contact with an end portion (lower end) of the rib 12. Then, the peripheral bar unit 20 moves in a direction away from the monitor unit 10. Next, when the latch 22 moves in an outer side direction of the peripheral bar unit 20 in the horizontal direction and the inclined surface 22a of the latch 22 on the outer side comes into contact with the engagement portion 11, the peripheral bar unit 20 moves in a direction away from the monitor unit 10. In the above description, the inner side direction and the outer side direction may be reversed. The spring is not necessarily required.

### 3. Regarding Connection Between Monitor Unit 10 and Peripheral Bar Unit 20

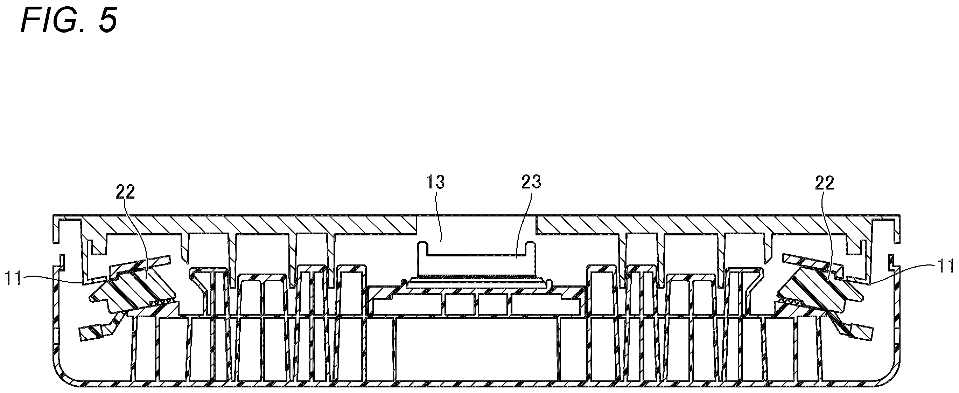

Next, a connection between the monitor unit 10 and the peripheral bar unit 20 will be described. FIG. 5 is a view illustrating the monitor unit 10 and the peripheral bar unit 20 when not connected.

As illustrated in FIG. 5, when the monitor unit 10 and the peripheral bar unit 20 are not connected, naturally, the connection portion 13 and the connection portion 23 are not connected, and the latch 22 and the engagement portion 11 are not engaged. By pushing the peripheral bar unit 20 toward the monitor unit 10 from the state in FIG. 5 and sequentially transitioning the state from FIGS. 4E to 4A, the monitor unit 10 and the peripheral bar unit 20 can be connected to each other, as illustrated in FIG. 3.

### 4. Regarding Countermeasures Against Impact

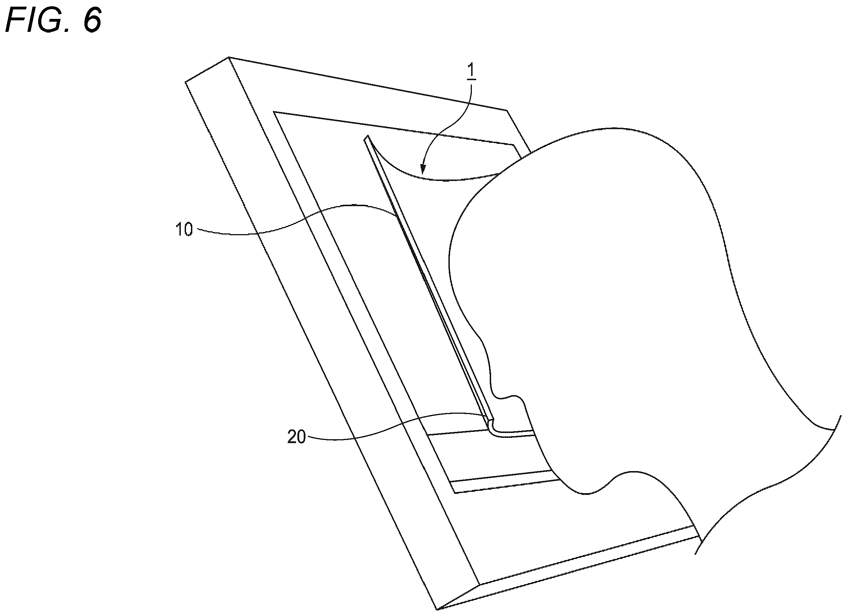

Next, various countermeasures against an impact on the electronic device 1 will be described. FIG. 6 is a view illustrating an example of a state in which the electronic device 1 receives an impact. For example, when the electronic device 1 is mounted on an aircraft or the like, a large impact may be applied to the electronic device 1 due to an accident or the like as illustrated in FIG. 6. At this time, the impact is often applied as a force in the downward direction to the electronic device 1. As a result, since the peripheral bar unit 20 is attached to the monitor unit 10 from below, there is a possibility that the peripheral bar unit 20 may be detached from the monitor unit 10. When the peripheral bar unit 20 is detached from the monitor unit 10, there is a risk that a passenger is injured by the detachment, and therefore, a structure is required that reduces the possibility that the peripheral bar unit 20 is detached from the monitor unit 10 even when an impact (force) in the downward direction is applied.

Therefore, various countermeasures measures against such a collision will be described in order.

### (1) A case in which a movable direction of a latch is at an angle inclined in an upward direction from the engagement position with respect to the horizontal direction

As a countermeasure against a collision, first, a case will be described in which a movable direction of a latch is at an angle inclined in an upward direction from the engagement position with respect to the horizontal direction.

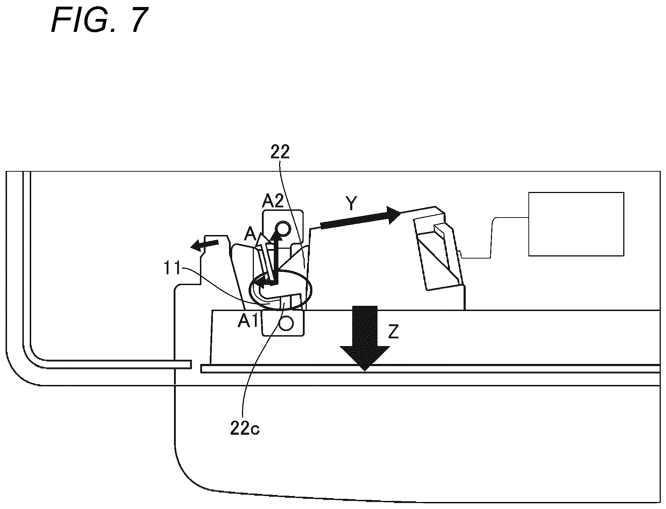

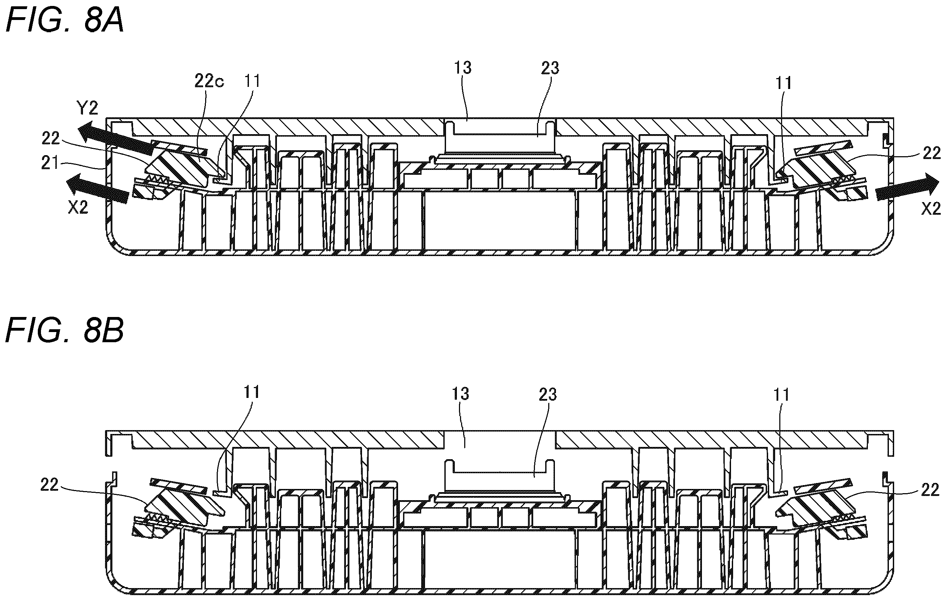

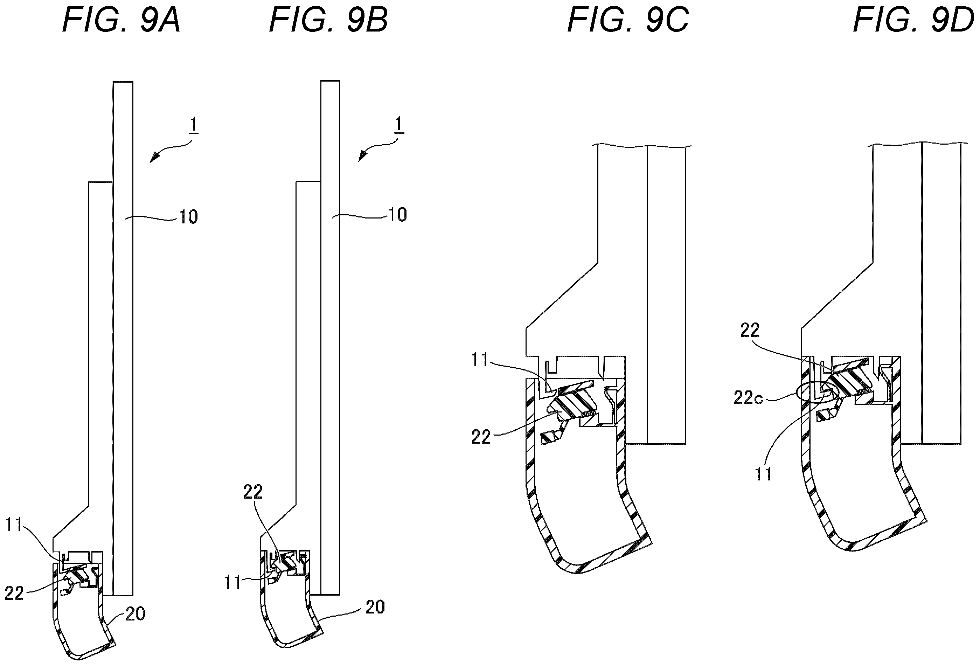

FIG. 7 is a view illustrating an example of the latch and the engagement portion in a state in which the monitor unit 10 and the peripheral bar unit 20 are connected. FIGS. 8A and 8B are views illustrating another connection form between the monitor unit 10 and the peripheral bar unit 20, FIG. 8A is a view illustrating the monitor unit 10 and the peripheral bar unit 20 when connected, and FIG. 8B is a view illustrating the monitor unit 10 and the peripheral bar unit 20 when not connected. FIGS. 9A to 9D are views illustrating another connection form between the monitor unit 10 and the peripheral bar unit 20, FIG. 9A is a view illustrating the monitor unit 10 and the peripheral bar unit 20 when not connected, FIG. 9B is a view illustrating the monitor unit 10 and the peripheral bar unit 20 when connected, FIG. 9C is an enlarged view of the latch and the engagement portion when not connected, and FIG. 9D is an enlarged view of the latch and the engagement portion when connected.

As illustrated in FIGS. 3 and 7, the electronic device 1 is a connection device that includes the monitor unit 10 (second unit) and the peripheral bar unit 20 (first unit), which are attachably and detachably connected to each other. The electronic device 1 includes the engagement portion 11 that is provided in the monitor unit 10 (second unit) and engages with the engagement end 22c at the engagement position, and the latch 22 that is provided in the peripheral bar unit 20 (first unit) and includes the engagement end 22c. The latch 22 is movable in at least in the disengagement direction from the engagement position (Y-direction in FIG. 7), and to ensure a smooth latch stroke against such an engagement surface, this disengagement direction is at an angle inclined in the upward direction from the engagement position with respect to the horizontal direction. At this time, the latch 22 and the engagement surface of the engagement portion 11 may have a shape such that when a force separating the peripheral bar unit 20 from the monitor unit 10 is applied, a reaction force from the monitor unit 10 against the latch 22 (force in the A-direction in FIG. 7) has a component force in a direction of causing the latch 22 to engage (leftward direction in FIG. 7). In FIG. 7, the disengagement direction is an upper right direction. The disengagement direction is never a vertical direction. That is, when an impact (force) in the downward direction, which is the Z-direction in FIG. 7, is applied, on the latch 22 and the engagement surface of the engagement portion 11, a force in the A-direction from the monitor unit 10 acts on the latch 22. The force in the A-direction has a component force in the A1-direction and a component force in the A2-direction as the component forces. Then, the component force in the A1-direction acts as a force engaging the latch 22.

Accordingly, even when an impact (force) in the downward direction, which is the Z-direction in FIG. 7, is applied, since the disengagement direction from the engagement position (Y-direction in FIG. 7) is an upward direction with respect to the horizontal direction (in other words, since the force received by the latch 22 from the engagement surface has a component force in the leftward direction, which is a direction of engagement), the latch 22 can be prevented from slipping off from the engagement portion 11. Conversely, when an impact (force) in the downward direction, which is the Z-direction, is applied, if the disengagement direction from the engagement position is the horizontal direction or the downward direction (in other words, if the force received by the latch 22 from the engagement surface has a component force in the rightward direction, which is the disengagement direction from the engagement position), the latch 22 may slip off. As a result, the peripheral bar unit 20 may be detached from the monitor unit 10. In the present embodiment, since the disengagement direction from the engagement position (Y-direction in FIG. 7) is the upward direction (in other words, the component force to the latch 22 received from the engagement surface is in the leftward direction, which is the direction of engagement, is applied), even if a force in the downward direction is applied to some extent, the latch 22 can be prevented from slipping off. Therefore, even when an unexpected impact or the like occurs, the possibility that connections between the plurality of units are accidentally disconnected can be reduced.

A shape of the engagement end 22c of the latch 22 may be along the disengagement direction from the engagement position (Y-direction in FIG. 7). To ensure a smooth latch stroke with respect to the engagement surface, the disengagement direction may be along the engagement surface. The term "along" does not necessarily need to be in the same direction, and is preferably within about 10 degrees forward and backward. (The same applies to the following "along".) Further, a shape of the engagement portion 11 may be along the disengagement direction from the engagement position. Accordingly, even when an unexpected impact or the like occurs, the latch 22 can be smoothly moved while reducing the possibility that the connections between the plurality of units are accidentally disconnected.

In FIG. 7, as described in FIGS. 4A to 4E, since the latch 22 is pushed in the X-direction from the lateral side surface toward the center of the peripheral bar unit 20, the disengagement direction from the engagement position is a direction from the lateral side surface toward the center of the peripheral bar unit 20. Also at this time, the disengagement direction from the engagement position is naturally not the horizontal direction, but a direction from a lower side of the lateral side surface toward an upper side of the center. Further, when an impact (force) in the downward direction is applied, a component force of the force received by the latch 22 from the engagement surface is in a direction from the center toward the lateral side surface of the peripheral bar unit 20. Similarly, the shape of the engagement end 22c of the latch 22 may be along the direction from the lateral side surface toward the center of the peripheral bar unit 20. Further, the shape of the engagement portion 11 may be along the direction from the lateral side surface toward the center of the peripheral bar unit 20. To ensure a smooth latch stroke when the latch 22 is pressed against the engagement surface, the disengagement direction may be at an angle inclined in the upward direction from the engagement position with respect to the horizontal direction.

A virtual straight line (Y-direction in FIG. 7) extending in the disengagement direction (extending in a direction in which the engagement surface is extended) may be at an angle of 5 degrees or more with respect to the horizontal direction. In FIG. 7, the virtual straight line (Y-direction in FIG. 7) extending in the disengagement direction is at an angle of about 10 degrees with respect to the horizontal direction. By being at an angle of 5 degrees or more and a certain angle or more, a structure is formed to be less likely to detach even when a collision occurs. A condition for this angle is that, even when an inclination of the latch 22 by an amount of rattle, a deformation of the latch 22, a deformation of the engagement portion 11 of the monitor unit 10, or a deformation of the entire monitor unit 10 and peripheral bar unit 20 occurs, when a force separating the monitor unit 10 and the peripheral bar unit 20 is applied, the latch 22 and the engagement surface of the engagement portion are not configured such that the reaction force include a component force in a disengagement direction of the latch 22 from the latch 22.

As illustrated in FIGS. 8A and 8B, the latch 22 may be configured to be pulled to the outer side through the access hole 21. In this case, as the latch 22 moves in the X2-direction, the latch 22 is disengaged from the engagement portion 11. At this time, the disengagement direction from the engagement position is the Y2-direction (upper left) in FIG. 8A, and is at an angle inclined in the upward direction from the engagement position with respect to the horizontal direction. The shape of the engagement end 22c of the latch 22 may be along the disengagement direction from the engagement position (Y2-direction in FIG. 8A). Further, the shape of the engagement portion 11 may be along the disengagement direction from the engagement position.

As illustrated in FIGS. 9A to 9D, the monitor unit 10 and the peripheral bar unit 20 may be attached and detached by moving the latch 22 in a depth direction (front-back direction) of the electronic device 1. In this case, as the latch 22 moves in the depth direction (upper right direction in FIGS. 9A to 9D), the latch 22 is disengaged from the engagement portion 11. At this time, the disengagement direction from the engagement position also is at an angle inclined in the upward direction from the engagement position with respect to the horizontal direction. The shape of the engagement end 22c of the latch 22 may be along the disengagement direction from the engagement position (Y2-direction in FIG. 8A). Further, the shape of the engagement portion 11 may be along the disengagement direction from the engagement position.

### (2) A case in which two spring components are used

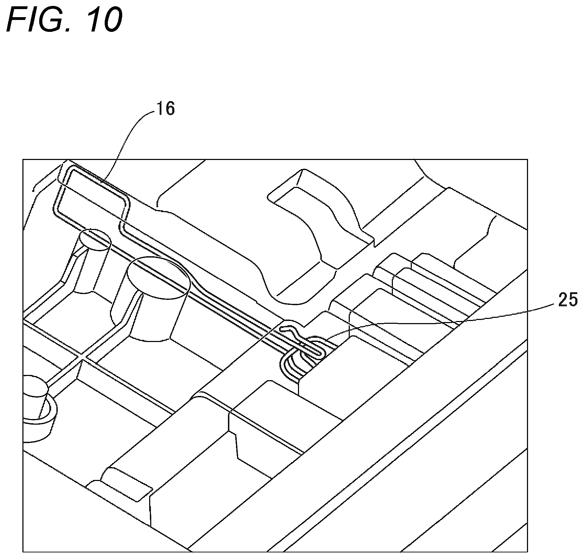

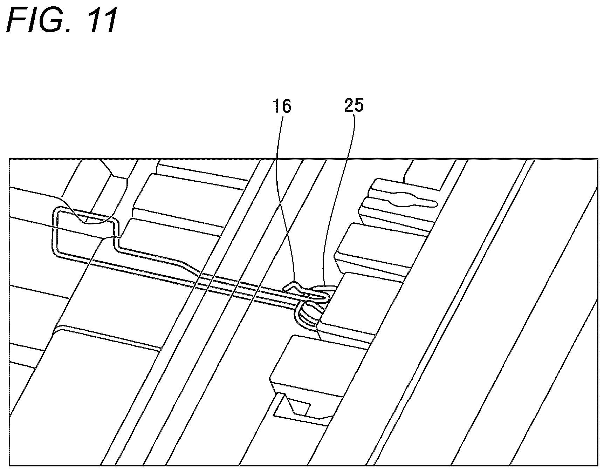

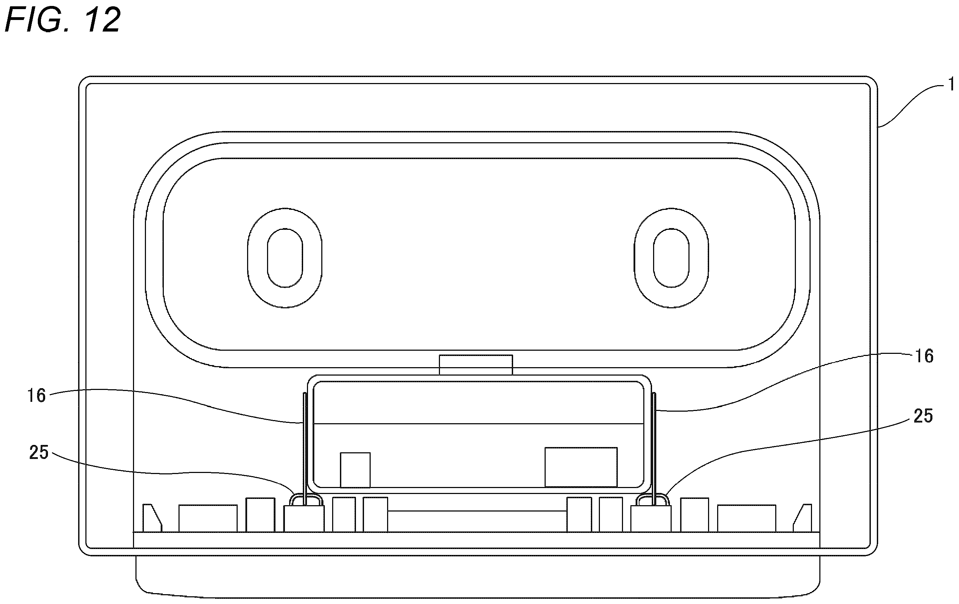

Next, a case in which two spring components are used will be described. FIG. 10 is a view illustrating the monitor unit 10 and the peripheral bar unit 20 when connected in a case in which spring components are used. FIG. 11 is a view illustrating the monitor unit 10 and the peripheral bar unit 20 when not connected in a case in which the spring components are used. FIG. 12 is a view illustrating the electronic device 1 in a case in which the monitor unit 10 and the peripheral bar unit 20 are connected by using the spring components.

The monitor unit 10 includes a monitor unit spring component 16. The peripheral bar unit 20 includes a peripheral bar unit spring component 25. In FIGS. 10 and 11, the monitor unit spring component 16 has a hook shape, and the peripheral bar unit spring component 25 forms at least a part of a loop. Of course, the monitor unit spring component 16 may form a loop shape, and the peripheral bar unit spring component 25 may form a hook shape. As illustrated in FIG. 10, when the monitor unit 10 and the peripheral bar unit 20 are connected, a hook of the monitor unit spring component 16 is caught on a loop of the peripheral bar unit spring component 25. As illustrated in FIG. 11, even when the monitor unit 10 and the peripheral bar unit 20 are not connected, the hook of the monitor unit spring component 16 is caught on the loop of the peripheral bar unit spring component 25. As a result, even when the monitor unit 10 and the peripheral bar unit 20 are accidentally detached due to a collision or the like, the peripheral bar unit 20 does not fall. As a result, a secondary disaster due to falling of the peripheral bar unit 20 can be prevented.

The monitor unit spring component 16 and the peripheral bar unit spring component 25 do not necessarily need to be formed of springs, and may be any object such as a wire or a linear object. However, considering resistance to impact, an object having elasticity is preferable.

As illustrated in FIG. 12, two monitor unit spring components 16 and two peripheral bar unit spring components 25 may be provided, with one of each provided on the left and right sides of the electronic device 1. With such a configuration, even when the monitor unit 10 and the peripheral bar unit 20 are accidentally detached due to a collision or the like, the peripheral bar unit 20 can be stably supported. When the monitor unit spring component 16 and the peripheral bar unit spring component 25 are used, the peripheral bar unit 20 can be prevented from falling even when the latch 22 is damaged by an impact.

### (3) A case in which engagement components are used

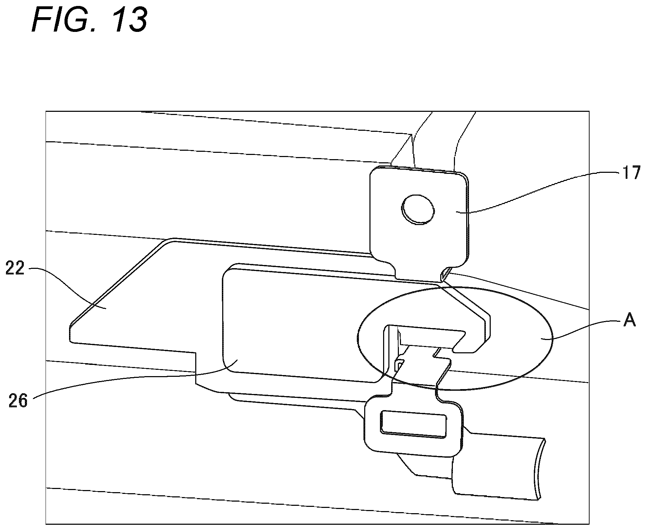

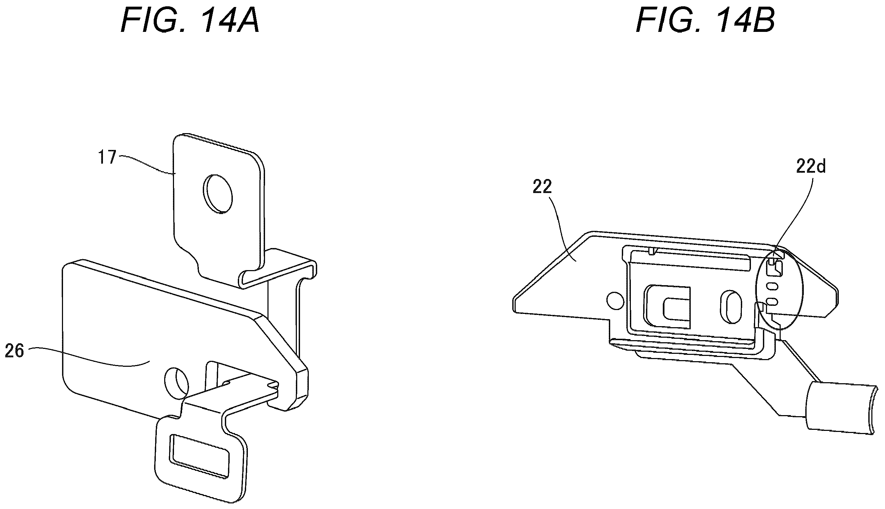

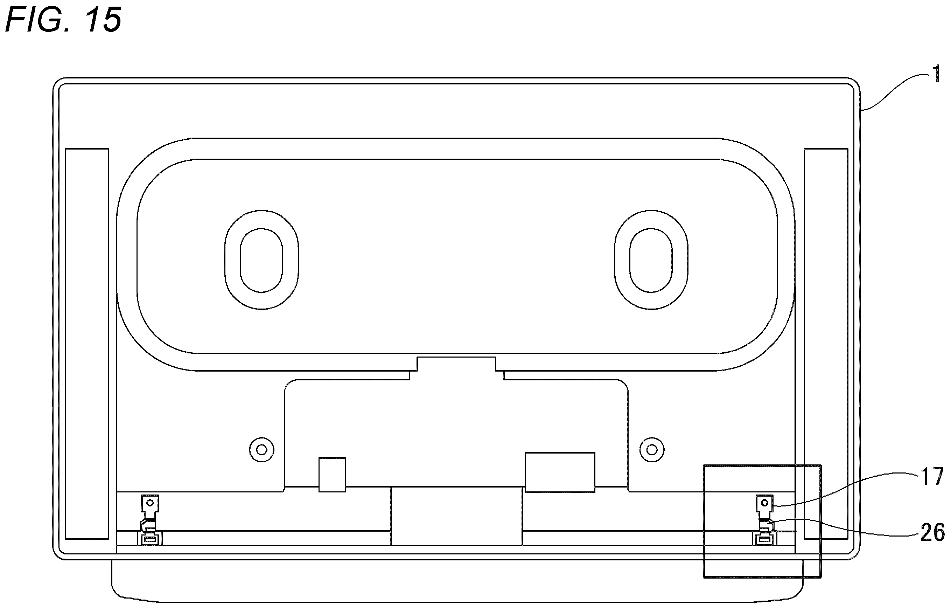

Next, a case in which engagement components are used will be described. FIG. 13 is a view illustrating the engagement components in a state in which the monitor unit 10 and the peripheral bar unit 20 are connected. FIG. 14A is a view illustrating the engagement components, and FIG. 14B is a view of a latch when the engagement components are used. FIG. 15 is a view illustrating the electronic device 1 in a case in which the engagement components are used.

The monitor unit 10 includes a monitor unit engagement component 17. The peripheral bar unit 20 includes a peripheral bar unit engagement component 26 and is disposed to overlap the latch 22. As illustrated in the region A, the peripheral bar unit engagement component 26 has a key-like shape. When the peripheral bar unit 20 is about to be accidentally detached from the monitor unit 10, as illustrated in FIG. 14A, the key-like shape of the peripheral bar unit engagement component 26 is caught on the monitor unit engagement component 17, preventing detachment. The monitor unit engagement component 17 and the peripheral bar unit engagement component 26 are preferably made of sheet metal, and the peripheral bar unit 20 can be stably supported by being made of sheet metal. As a result, a secondary disaster due to falling of the peripheral bar unit 20 can be prevented.

At this time, as illustrated in FIG. 14B, the latch 22 may be formed with at least one hole 22d. By forming the hole 22d, when a collision or the like occurs, the latch 22 is more likely to be damaged. As a result of the latch 22 being damaged and the key-like shape of the latch 26 being exposed, the monitor unit engagement component 17 and the peripheral bar unit engagement component 26 can be engaged with each other without the latch 22 interfering.

As illustrated in FIG. 15, at least one monitor unit engagement component 17 and at least one peripheral bar unit engagement component 26 may be provided. Since the peripheral bar unit engagement component 26 is disposed to overlap the latch 22, when at least one monitor unit engagement component 17 and at least one peripheral bar unit engagement component 26 are disposed, the monitor unit engagement component 17 and the peripheral bar unit engagement component 26 are disposed near either one of the left and right latches 22. Of course, two monitor unit engagement component 17 and two peripheral bar unit engagement component 26 may be disposed.

### 5. Summary

In the present embodiment, the electronic device 1 is a connection device that includes a first unit (peripheral bar unit 20) and a second unit (monitor unit 10), which are attachably and detachably connected to each other, the connection device including: a latch 22 that is provided in the first unit and includes an engagement end 22c; and an engagement portion 11 provided in the second unit and configured to engage with the engagement end 22c at an engagement position, in which the latch 22 is movable in at least a disengagement direction from the engagement position, and the disengagement direction is at an angle inclined in an upward direction from the engagement position with respect to a horizontal direction. Accordingly, in the connection device and the electronic device that include a plurality of units connected to each other, a possibility that connections between the plurality of units are accidentally disconnected can be reduced even when an unexpected impact or the like occurs.

A shape of the engagement end 22c of the latch 22 may be along the disengagement direction from the engagement position. To ensure a smooth latch stroke when the latch 22 is pressed against the engagement surface, the disengagement direction may be along a virtual straight line extending in a direction in which an engagement surface is extended. Accordingly, even when an unexpected impact or the like occurs, the latch 22 can be smoothly moved while reducing the possibility that the connections between the plurality of units are accidentally disconnected.

Further, a shape of the engagement portion 11 may be along the disengagement direction from the engagement position. Accordingly, even when an unexpected impact or the like occurs, the latch 22 can be smoothly moved while reducing the possibility that the connections between the plurality of units are accidentally disconnected.

The disengagement direction from the engagement position may be a direction from a lateral side surface toward a center of the second unit (monitor unit 10). Accordingly, when the latch 22 is pressed in the X-direction from a lateral side surface toward a center of the peripheral bar unit 20, the possibility that connections between the plurality of units are accidentally disconnected can be reduced even when an unexpected impact or the like occurs.

Further, the shape of the engagement end 22c of the latch 22 may be at an angle inclined in the upward direction from the lateral side surface toward the center of the second unit (monitor unit 10) with respect to the horizontal direction. Accordingly, when the latch 22 is pressed in the X-direction from the lateral side surface toward the center of the peripheral bar unit 20, the latch 22 can be smoothly moved while reducing the possibility that the connections between the plurality of units are accidentally disconnected, even when an unexpected impact or the like occurs.

Further, the shape of the engagement portion 11 may be at an angle inclined in the upward direction from the lateral side surface toward the center of the second unit (monitor unit 10) with respect to the horizontal direction. Accordingly, when the latch 22 is pressed in the X-direction from the lateral side surface toward the center of the peripheral bar unit 20, the latch 22 can be smoothly moved while reducing the possibility that the connections between the plurality of units are accidentally disconnected, even when an unexpected impact or the like occurs.

A virtual straight line extending in the disengagement direction may be at an angle of 5 degrees or more with respect to the horizontal direction. Further, the virtual straight line extending in the direction in which the engagement surface is extended may be at an angle of 5 degrees or more with respect to the horizontal direction. By being at an angle of 5 degrees or more and a certain angle or more, a structure is formed to be less likely to detach even when a collision occurs.

In the present embodiment, the electronic device 1 is a connection device that includes a first unit (peripheral bar unit 20) and a second unit (monitor unit 10), which are attachably and detachably connected to each other, the connection device including: a latch 22 that is provided in the first unit and includes an engagement end 22c; and an engagement portion 11 provided in the second unit and configured to engage with the engagement end 22c at an engagement position, in which the latch 22 is movable in at least a disengagement direction from the engagement position, and the disengagement direction is at an angle inclined in an upward direction from the engagement position with respect to a horizontal direction. Accordingly, in the electronic device including a plurality of units connected to each other, a possibility that connections between the plurality of units are accidentally disconnected can be reduced even when an unexpected impact or the like occurs.

In the above description, a case in which a direction in which the peripheral bar unit 20 is detached from the monitor unit 10 is a downward direction from a position relation in which the monitor unit 10 including the engagement portion 11 is above and the peripheral bar unit 20 including the latch 22 is below has been described. However, of course, the direction may be other than the downward direction. Further, a force acting in the direction in which the monitor unit 10 and the peripheral bar unit 20 are detached from each other due to an impact is not limited to the downward direction, and may act in any direction. FIGS. 16A to 16D are views illustrating a relation between a direction in which the peripheral bar unit 20 is detached from the monitor unit 10 and a disengagement direction from the engagement position of the latch, FIG. 16A is a view illustrating a case in which the detachment direction is a downward direction, FIG. 16B is a view illustrating a case in which the detachment direction is a leftward direction, FIG. 16C is a view illustrating a case in which the detachment direction is a rightward direction, and FIG. 16D is a view illustrating a case in which the detachment direction is an upward direction. In FIGS. 16B to 16D, the position relation between the monitor unit 10 and the peripheral bar unit is different from that in FIG. 16A, but when rotated, all of them have the same position relation as that illustrated in FIG. 16A. In FIGS. 16A to 16D, a direction in which the peripheral bar unit 20 is detached from the monitor unit 10 is indicated by an arrow. In addition, regardless of the position relation between the monitor unit 10 and the peripheral bar unit 20, when rotated to a position relation in which the unit including the engagement portion 11 is above and the unit including the latch 22 is below, the disengagement direction may be at an angle inclined in the upward direction from the engagement position with respect to the horizontal direction. Accordingly, regardless of a positional relation between the monitor unit 10 and the peripheral bar unit 20, in the connection device and the electronic device that include the plurality of units connected to each other, the possibility that connections between the plurality of units are accidentally disconnected can be reduced even when an unexpected impact or the like occurs in any direction.

### <Regarding Techniques of Present Disclosure>

As described above, the present disclosure discloses the following technical ideas.

### (Technique 1) is a connection device as defined in claim 1.

Accordingly, in a connection device and an electronic device that include a plurality of units connected to each other, a possibility that connections between the plurality of units are accidentally disconnected can be reduced even when an unexpected impact or the like occurs.

### (Technique 2) is a connection device as defined in claim 2.

Accordingly, even when an unexpected impact or the like occurs, the latch 22 can be smoothly moved while reducing the possibility that the connections between the plurality of units are accidentally disconnected.

### (Technique 3) is connection device as defined in claim 3.

Accordingly, even when an unexpected impact or the like occurs, the latch 22 can be smoothly moved while reducing the possibility that the connections between the plurality of units are accidentally disconnected.

### (Technique 4) is a connection device as defined in claim 4.

Accordingly, when the latch 22 is pressed in an X-direction from a lateral side surface toward a center of the peripheral bar unit 20, the possibility that connections between the plurality of units are accidentally disconnected can be reduced even when an unexpected impact or the like occurs.

### (Technique 5) is a connection device as defined in claim 5.

Accordingly, when the latch 22 is pressed in the X-direction from the lateral side surface toward the center of the peripheral bar unit 20, the latch 22 can be smoothly moved while reducing the possibility that the connections between the plurality of units are accidentally disconnected, even when an unexpected impact or the like occurs.

### (Technique 6) is a connection device as defined in claim 6,

Accordingly, when the latch 22 is pressed in the X-direction from the lateral side surface toward the center of the peripheral bar unit 20, the latch 22 can be smoothly moved while reducing the possibility that the connections between the plurality of units are accidentally disconnected, even when an unexpected impact or the like occurs.

### (Technique 7) is a connection device as defined in claim 7.

Accordingly, by being at an angle of 5 degrees or more and a certain angle or more, a structure is formed to be less likely to detach even when a collision occurs.

### (Technique 8) is a connection device as defined in claim 8.

Accordingly, in the connection device and the electronic device that include the plurality of units connected to each other, the possibility that connections between the plurality of units are accidentally disconnected can be reduced even when an unexpected impact or the like occurs.

### (Technique 9) is a connection device as defined in claim 9.

Accordingly, regardless of a positional relation between the monitor unit 10 and the peripheral bar unit 20, in the connection device and the electronic device that include the plurality of units connected to each other, the possibility that connections between the plurality of units are accidentally disconnected can be reduced even when an unexpected impact or the like occurs in any direction.

Although various embodiments have been described above with reference to the accompanying drawings, the present disclosure is not limited thereto. It is apparent to those skilled in the art that various modifications, corrections, substitutions, additions, deletions, and equivalents can be conceived within the scope described in the claims, and it is understood that such modifications, corrections, substitutions, additions, deletions, and equivalents also fall within the technical scope of the present disclosure. In addition, components in the various embodiments described above may be freely combined in a range.

The present disclosure is useful as presentations of a connection device and an electronic device, which include a plurality of units connected to each other, capable of reducing a possibility that connections between the plurality of units are accidentally disconnected even when an unexpected impact or the like occurs.

## Claims

1. A connection device (1) that includes a first unit (20) and a second unit (10), which are attachably and detachably connected to each other, the connection device comprising:
a latch (22) that is provided in the first unit and includes an engagement end (22c); and
an engagement portion (11) provided in the second unit and configured to engage with the engagement end (22c) at an engagement position, wherein
the latch (22) is movable in at least a disengagement direction from the engagement position, and
the disengagement direction is at an angle inclined in an upward direction from the engagement position with respect to a horizontal direction.

2. The connection device (1) according to claim 1, wherein
a shape of the engagement end (22c) of the latch (22) is along the disengagement direction from the engagement position.

3. The connection device (1) according to claim 1 or 2, wherein
a shape of the engagement portion (11) is along the disengagement direction from the engagement position.

4. The connection device (1) according to any one of claims 1 to 3, wherein
the disengagement direction from the engagement position is a direction from a lateral side surface toward a center of the second unit (10).

5. The connection device (1) according to any one of claims 1 to **4,** wherein
a shape of the engagement end (22c) of the latch (22) is at an angle inclined in the upward direction from the lateral side surface toward the center of the second unit (10) with respect to the horizontal direction.

6. The connection device (1) according to any one of claims 1 to 5, wherein
a shape of the engagement portion (11) is at an angle inclined in the upward direction from the lateral side surface toward the center of the second unit (10) with respect to the horizontal direction.

7. The connection device (1) according to any one of claims 1 to 6, wherein
a virtual straight line extending in the disengagement direction is at an angle of 5 degrees or more with respect to the horizontal direction.

8. The connection device (1) according to any one of claims 1 to 6, wherein
when a force separating the second unit and the first unit is applied, a reaction force from the second unit to the latch includes a component force in a direction in which the latch engages.

9. The connection device according to any one of claims 1 to 7, wherein
when a direction in which the first unit is detached from the second unit is a downward direction, the disengagement direction is at an angle inclined in the upward direction from the engagement position with respect to the horizontal direction.

## Patentansprüche

1. Verbindungsvorrichtung (1), die eine erste Einheit (20) und eine zweite Einheit (10) umfasst, die aneinander anbringbar und voneinander lösbar miteinander verbunden sind, wobei die Verbindungsvorrichtung umfasst:
einen Riegel (22), der in der ersten Einheit vorgesehen ist und ein Eingriffsende (22c) umfasst; und
einen Eingriffsabschnitt (11), der in der zweiten Einheit vorgesehen und zum Eingreifen mit dem Eingriffsende (22c) an einer Eingriffsposition eingerichtet ist, wobei
der Riegel (22) zumindest in einer Freigaberichtung von der Eingriffsposition bewegbar ist, und
die Freigaberichtung in einem Winkel liegt, der in einer Aufwärtsrichtung von der Eingriffsposition in Bezug auf eine horizontale Richtung geneigt ist.

2. Verbindungsvorrichtung (1) nach Anspruch 1, wobei
eine Form des Eingriffsendes (22c) des Riegels (22) entlang der Freigaberichtung von der Eingriffsposition verläuft.

3. Verbindungsvorrichtung (1) nach Anspruch 1 oder 2, wobei
eine Form des Eingriffsabschnitts (11) entlang der Freigaberichtung von der Eingriffsposition verläuft.

4. Verbindungsvorrichtung (1) nach einem der Ansprüche 1 bis 3, wobei
die Freigaberichtung von der Eingriffsposition eine Richtung von einer seitlichen Seitenfläche zu einer Mitte der zweiten Einheit (10) ist.

5. Verbindungsvorrichtung (1) nach einem der Ansprüche 1 bis **4,** wobei
eine Form des Eingriffsendes (22c) des Riegels (22) in einem Winkel liegt, der in der Aufwärtsrichtung von der seitlichen Seitenfläche zur Mitte der zweiten Einheit (10) in Bezug auf die horizontale Richtung geneigt ist.

6. Verbindungsvorrichtung (1) nach einem der Ansprüche 1 bis 5, wobei
eine Form des Eingriffsabschnitts (11) in einem Winkel liegt, der in der Aufwärtsrichtung von der seitlichen Seitenfläche zur Mitte der zweiten Einheit (10) in Bezug auf die horizontale Richtung geneigt ist.

7. Verbindungsvorrichtung (1) nach einem der Ansprüche 1 bis 6, wobei
eine virtuelle Gerade, die sich in der Freigaberichtung erstreckt, in einem Winkel von 5 Grad oder mehr in Bezug auf die horizontale Richtung liegt.

8. Verbindungsvorrichtung (1) nach einem der Ansprüche 1 bis 6, wobei,
wenn eine Kraft, die die zweite Einheit und die erste Einheit trennt, aufgebracht wird, eine Reaktionskraft von der zweiten Einheit auf den Riegel eine Kraftkomponente in einer Richtung beinhaltet, in der der Riegel eingreift.

9. Verbindungsvorrichtung nach einem der Ansprüche 1 bis 7, wobei,
wenn eine Richtung, in der die erste Einheit von der zweiten Einheit gelöst wird, eine Abwärtsrichtung ist, die Freigaberichtung in einem Winkel liegt, der in der Aufwärtsrichtung von der Eingriffsposition in Bezug auf die horizontale Richtung geneigt ist.

## Revendications

1. Dispositif de connexion (1) qui comprend une première unité (20) et une deuxième unité (10), qui sont reliées l'une à l'autre de manière fixable et détachable, le dispositif de connexion comprenant :
un loquet (22) qui est prévu dans la première unité et comprend une extrémité d'engagement (22c) ; et
une partie d'engagement (11) prévue dans la deuxième unité et configurée pour s'engager avec l'extrémité d'engagement (22c) à une position d'engagement, dans lequel
le loquet (22) est mobile dans au moins une direction de désengagement à partir de la position d'engagement, et
la direction de désengagement est selon un angle incliné dans une direction vers le haut à partir de la position d'engagement par rapport à une direction horizontale.

2. Dispositif de connexion (1) selon la revendication 1, dans lequel
une forme de l'extrémité d'engagement (22c) du loquet (22) s'étend le long de la direction de désengagement à partir de la position d'engagement.

3. Dispositif de connexion (1) selon la revendication 1 ou 2, dans lequel
une forme de la partie d'engagement (11) s'étend le long de la direction de désengagement à partir de la position d'engagement.

4. Dispositif de connexion (1) selon l'une quelconque des revendications 1 à 3, dans lequel
la direction de désengagement à partir de la position d'engagement est une direction allant d'une surface latérale vers un centre de la deuxième unité (10).

5. Dispositif de connexion (1) selon l'une quelconque des revendications 1 à **4,** dans lequel
une forme de l'extrémité d'engagement (22c) du loquet (22) est selon un angle incliné vers le haut depuis la surface latérale vers le centre de la deuxième unité (10) par rapport à la direction horizontale.

6. Dispositif de connexion (1) selon l'une quelconque des revendications 1 à 5, dans lequel
une forme de la partie d'engagement (11) est selon un angle incliné vers le haut depuis la surface latérale vers le centre de la deuxième unité (10) par rapport à la direction horizontale.

7. Dispositif de connexion (1) selon l'une quelconque des revendications 1 à 6, dans lequel
une droite virtuelle s'étendant dans la direction de désengagement est selon un angle de 5 degrés ou plus par rapport à la direction horizontale.

8. Dispositif de connexion (1) selon l'une quelconque des revendications 1 à 6, dans lequel,
lorsqu'une force séparant la deuxième unité et la première unité est appliquée, une force de réaction de la deuxième unité sur le loquet inclut une composante de force dans une direction dans laquelle le loquet s'engage.

9. Dispositif de connexion selon l'une quelconque des revendications 1 à 7, dans lequel,
lorsqu'une direction dans laquelle la première unité est détachée de la deuxième unité est une direction vers le bas, la direction de désengagement est selon un angle incliné vers le haut à partir de la position d'engagement par rapport à la direction horizontale.
